(19)

Europäisches
Patentamt
European
Patent Office
Office européen
des brevets

(11) **EP 1 491 055 B1**

(12) **EUROPEAN PATENT SPECIFICATION**

(45) Date of publication and mention
of the grant of the patent:
**20.08.2008 Bulletin 2008/34**

(51) Int Cl.:
*H04N 7/26* (2006.01) *H03M 7/30* (2006.01)

(21) Application number: **03745393.3**

(86) International application number:
**PCT/IN2003/000049**

(22) Date of filing: **07.03.2003**

(87) International publication number:
**WO 2003/084205 (09.10.2003 Gazette 2003/41)**

(54) **REPETITION CODED COMPRESSION FOR HIGHLY CORRELATED IMAGE DATA**

WIEDERHOLUNGSCODIERTE KOMPRIMIERUNG FÜR STARK KORRELIERTE BILDDATEN

COMPRESSION CODEE DE REPETITIONS POUR DONNEES D'IMAGE HAUTEMENT
CORRELEES

(84) Designated Contracting States:
**AT BE BG CH CY CZ DE DK EE ES FI FR GB GR
HU IE IT LI LU MC NL PT RO SE SI SK TR**

(30) Priority: **01.04.2002 IN MA08952001**

(43) Date of publication of application:
**29.12.2004 Bulletin 2004/53**

(73) Proprietor: **Matrixview Limited
Singapore 068813 (SG)**

(72) Inventor: **THIAGARAJAN, Arvind
600090 Chennai,
Tamil Nadu (IN)**

(74) Representative: **McLeish, Nicholas Alistair
Maxwell et al
Boult Wade Tennant
Verulam Gardens
70 Gray's Inn Road
London WC1X 8BT (GB)**

(56) References cited:
**EP-A- 0 387 013 WO-A1-98/37700
US-B1- 6 351 568**

- **SCHWARTZ J.W.; BARKER R.C.: 'BIT-PLANE
ENCODING: A TECHNIQUE FOR SOURCE
ENCODING' IEEE TRANSACTIONS ON
AEROSPACE AND ELECTRONIC SYSTEMS,
IEEE SERVICE CENTER July 1966,
PISCATAWAY, NJ, US, pages 385 - 392,
XP002067595**
- **SERRANO C.; ACHA B.; RANGAYYAN R.M.:
'Segmentation-based lossless compression for
color images' IMAGE ANALYSIS AND
PROCESSING, 1999. PROCEEDINGS.
INTERNATIONAL CONFERENCE ON VENICE,
ITALY 27-29 SEPT. 1999, LOS ALAMITOS, CA,
USA,IEEE COMPUT. SOC, US 27 September 1999,
LOS ALAMITOS, CA, USA, pages 90 - 94**
- **ROBERTSON G.R.; ABURDENE M.F.; KOZICK
R.J.: 'Differential Block Coding of Bilevel Images'
IEEE TRANSACTIONS ON IMAGE PROCESSING
vol. 5, no. 9, 30 September 1996, IEEE SERVICE
CENTER, PISCATAWAY, NJ, US, pages 1368 -
1370, XP000626914**

**Description**

**Field of the Invention**

The present invention relates to a method and system of compressing image data and other highly correlated data streams.

**Background of Invention**

Image and data compression is of vital importance and has great significance in many practical applications. To choose between lossy compression and lossless compression depends primarily on the application.

Some applications require a perfectly lossless compression scheme so as to achieve zero errors in the automated analysis. This is particularly relevant when where an automatic analysis is performed on the image or data. Generally, Huffman coding and other source coding techniques are used to achieve lossless compression of image data.

In certain other applications, the human eye visually analyzes images. Since the human eye is insensitive to certain patterns in the images, such patterns are discarded from the original images so as to yield good compression of data. These schemes are termed as "visually lossless" compression schemes. This is not a perfectly reversible process as the de-compressed image data is different from the original image data. The degree of difference depends on the quality of compression, and the compression ratio. Compression schemes based on discrete cosine transforms and wavelet transforms followed by lossy quantization of data are typical examples of visually lossless scheme.

As a general rule, it is desirable to achieve the maximum compression ratio with zero, or minimal, possible loss in the quality of the image. At the same time, the complexity involved in the system and the power consumed by the image compression system are important parameters when it comes to a hardware-based implementation.

Usually, image compression is carried out in two steps. The first step is to use a pre-coding technique, which is normally based on signal transformations. The second step would be to further compress the data values by standard source coding techniques such as, for example, Huffman and Lempel-Ziv schemes.

The initial pre-coding step is the most critical and important operation in image compression. The complexity involved with DCT and Wavelet based transformations is quite high because of the large number of multiplications involved. This is illustrated in the following DCT equation:

$$DCT(i,j) = \frac{1}{\sqrt{2N}} C(i)C(j) \sum_{x=0}^{N-1}\sum_{y=0}^{N-1} f(x,y)\cos\left[\frac{(2x+1)i\pi}{2N}\right]\cos\left[\frac{(2y+1)j\pi}{2N}\right]$$

where C(x)= $\frac{1}{\sqrt{2}}$ if x=0. cisc if x>0.

$$C(x) = \frac{1}{\sqrt{2}} \text{ if } x = 0, \text{ else } 1 \text{ if } x > 0.$$

In addition to the large number of multiplications involved in carrying out the above DCT equation, there is also a zigzag rearrangement of the image data, which involes additional complexity. These conventional schemes for image compression are not very well suited for hardware-based implementation.

The true requirement is an image compression system which does not involve rigorous transforms, and complex calculations. It also has to be memory efficient and power efficient.

There are various image compression techniques presently available. A familiar few are JPEG, JPEG-LS, JPEG-2000, CALIC, FRACTAL and RLE.

JPEG compression is a trade-off between degree of compression, resultant image quality, and time required for compression/decompression. Blockiness results at high image compression ratios. It produces poor image quality when compressing text or images containing sharp edges or lines. Gibb's effect is the name given to this phenomenon - where disturbances/ripples may be seen at the margins of objects with sharp borders. It is not suitable for 2-bit black and white images. It is not resolution independent, and does not provide for scalability, where the image is displayed optimally depending on the resolution of the viewing device.

JPEG-LS does not provide support for scalability, error resilience or any such functionality. Blockiness still exist at higher compression ratios and it does not offer any particular support for error resilience, besides restart markers.

JPEG-2000 does not provide any truly substantial improvement in compression efficiency and is significantly more complex than JPEG, with the exception of JPEG-LS for lossless compression. The complexity involved in JPEG-2000 is higher for a lower enhancement in the compression ration and efficiency.

Although CALIC provides the best performance in lossless compression, it cannot be used for progressive image transmission as it implements a predictive-based algorithm that can work only in lossless/nearly-lossless mode. Complexity and computational cost are high.

The results show that the choice of the "best" standard depends strongly on the application at hand.

Schwartz JW; Barker RC : "Bit-Plane Encoding : A Technique for Source Encoding", IEEE Transactions on Aerospace and Electronic Systems, IEEE Service Center, Piscataway, NJ, US 1966-07-00, XP002067595 discloses a run-length coding method which compresses individual bit-planes of data samples based on the length of runs of binary 0's and 1's. Robinson et al: "Differential Block Coding of Bilevel Images", IEEE Trans. on Image Proc. Vol. 5, No. 9, Sept 1996 discloses an image coding method for black and white binary images in which a grid of difference values is generated by comparing horizontally adjacent pixels via an XOR operation.

## Summary of the Invention

According to an aspect of the invention, there is provided a method according to claim 1.

According to another aspect of the invention, there is provided an apparatus according to claim 5.

In accordance with an embodiment of the invention, there is provided a method of compression of image data of an image wherein each element is compared with a previous element. If they are both equal, a first value is recorded. If they are not both equal, a second value is recorded. Each element may be a pixel. The first value may be a 1, and the second value may be a 0.

The first and second values may be stored in a bit plane. For a one-dimensional compression, a single bit plane may be used to store the values. However, for a two-dimensional compression, comparison may be in both horizontal and vertical directions, a separate bit plane being used for each direction.

The bit-planes for the horizontal and vertical directions may be combined by binary addition to for a repetition coded compression bit-plane. Combining may be by binary addition, only the second values being stored for lossless reconstruction of the image. The result of the combining may be repetition coded compression data values. All other image data values may be able to be reconstructed using the repetition coded compression data values, and the bit planes for the horizontal and vertical directions.

Storage in bit planes may be in a matrix. A single mathematical operation may be performed for each element.

In accordance with an embodiment of the invention, there is provided a system for repetition coded compression comprising a camera for capturing at least one image and for supplying digital data; a reshaping block for rearranging the digital data into a matrix of image data values; a processor for receiving the matrix of image data values and compressing the image data values to form compressed data; and a memory for storage of the compressed data.

The camera may be analog. An analog-to-digital converter may be used to convert the analog image to provide the digital data.

In accordance with an embodiment of the invention, there is provided a method for compression of an image comprising capturing the image and converting the image into digital form to provide digital data. The digital data is reshaped into a digital data matrix. Repetitions in the digital data matrix and encoded into a bit-plane index, and stored data values. The compressed data is stored in a storage memory.

The bit-planes may contain information regarding the repetitions along horizontal and vertical directions. There may be further included the combining of the horizontal and vertical bit-planes by a binary addition operation to give a repetition coded compression bit-plane. There may also be included comparing the repetition coded compression bit-plane with the digital data matrix to obtain final repetition coded compression data values.

The method may further include storing and archiving the repetition coded compression data values along with the horizontal and vertical bit-planes.

The compression is preferably lossless. Alternatively, the method a method may further include compression by comparison with a threshold value to achieve lossy compression and a significantly higher compression ratio.

The method may be used for an application selected from: medical image archiving, medical image transmission, database system, information technology, entertainment, communications applications, and wireless application, satellite imaging, remote sensing, and military applications.

## Brief Description of the Drawings

In order that the invention may be fully understood and readily put into practical effect, there shall now be described by way of non-limitative example only a preferred embodiment of the present invention, the description being with reference to the accompanying illustrative drawings in which:

> Figure 1 illustrates the entire image compression system based on repetition coded compression on a hardware implementation;
> Figure 2 is a sample grayscale image of a human brain, which is captured by magnetic resonance imaging ("MRI") to demonstrate the compression able to be achieved by repetition coded compression system;
> Figure 3 is an enlarged image of a small region from Figure 2;
> Figure 4 shows that the image of Figure 2 is made up of many pixels in grayscale;
> Figure 5 shows a 36-pixel region within the sample MRI image of Figure 2;
> Figure 6 shows the ASCII value equivalent of the image data values for the region of Figure 5;
> Figure 7 shows the application of repetition coded compression along the horizontal direction in the image matrix of Figure 6;
> Figure 8 shows the application of repetition coded compression along the vertical direction in the image matrix of Figure 6;
> Figure 9 shows the combination of horizontal and vertical bit-planes by a binary addition operation;
> Figure 10 shows the total memory required for the region of Figure 5 before and after applying repetition coded compression;
> Figure 11 shows the application of repetition coded compression to the entire image; and
> Figure 12 shows the operational flow for the implementation of repetition coded compression.

## Detailed Description of Preferred Embodiments

Image data is a highly correlated. This means that the adjacent data values in an image are repetitive in nature. Therefore, it is possible to achieve some compression out of this repetitive property of the image and then apply Huffman coding or other source coding schemes. Such a method would be very efficient.

In repetition coded compression ("RCC"), each element is compared with the previous element. If both of them are equal then a value of "1" is stored in a bit-plane. Otherwise a value of '0' is stored in the bit-plane. Only the difference value is stored in a matrix, instead of storing all the repeating values.

In a one-dimensional performance of the method, only one bit-plane is used to code the repetition in the horizontal direction.

But in a two-dimensional performance of the method, two bit-planes are used to code the repetitions in both the horizontal and the vertical directions. This is more efficient and gives a better compression ratio.

The compression system is based on a mathematical comparison of adjacent image data values. The comparison is performed between adjacent image data values in both the horizontal as well as vertical directions. The bit-planes formed as a resulf of the comparison in the horizontal and vertical directions are respectively combined by a binary addition method. After this the resultant bit-plane positions are called as RCC bit-planes. The zero values in the RCC bit-plane are stored for lossless reconstruction of the original image. For lossless reconstruction, they are the only values stored. The stored values correspond to the same locations in the original image matrix as zeros in the RCC bit-plane and are hereinafter called RCC data values. All the other image data values can be reconstructed by using the RCC data values, and the horizontal and vertical bit-planes.

in case of a lossy system of implementation, the adjacent pixels are not only compared for repetition, but also for the difference value. if the difference value between adjacent pixels is less than a given arbitrary threshold value, then the two adjacent pixels are made as the same. This further increases the number of repetitions in the image data and therefore also increases the compression ratio after repetition coded compression is applied. The value of the threshold can be varied according to the requirements of the particular application, and system. The higher the threshold, the better the compression ratio and also the higher the loss in the quality of the reconstructed image.

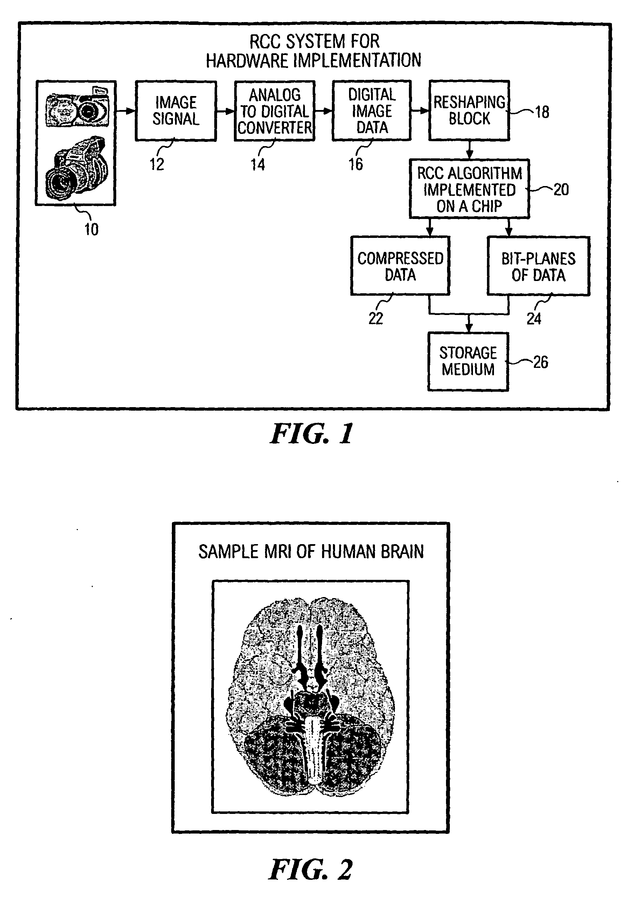

Figure 1 illustrates the entire image compression system based on repetition coded compression on a hardware implementation. The analog image signals 12 are captured by the camera 10 and are converted into respective digital data 16 by a analog to digital converter 14. This digital data 16 is rearranged into a matrix of image data values by a reshaping block 18. The reshaped image matrix is stored in the embedded chip 20, which performs the entire repetition coded compression system. This therefore gives the compressed repetition coded compression data values 22 and also the bit-planes of data 24 for storage, archival and future retrieval 26.

Figure 2 is a sample image of the human brain which is captured by magnetic resonance imaging (MRI). This sample image may be used to demonstrate the compression achieved by repetition coded compression. It is a grayscale image.

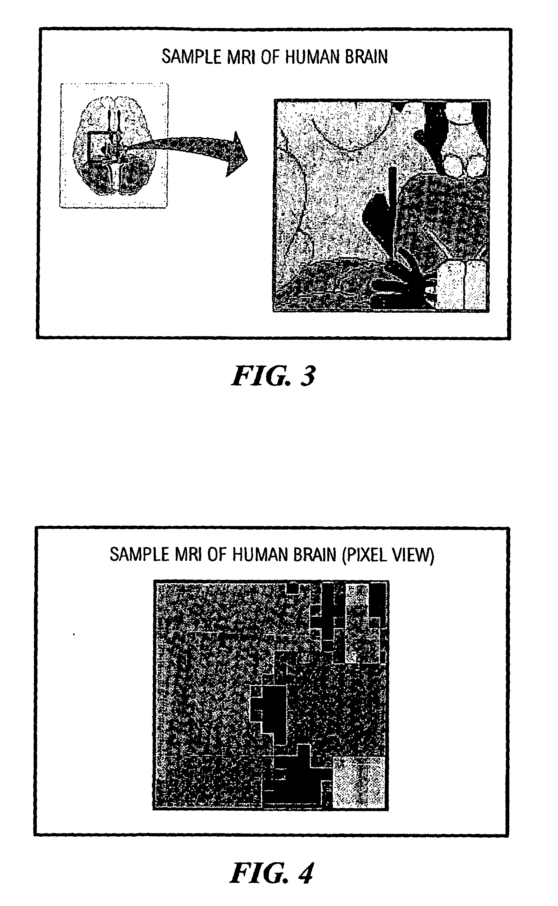

Figure 3 zooms a small region from the sample MRI image of the human brain. This zoomed region may also be used for demonstrating the repetition coded compression system.

Figure 4 shows that the image is made up of lot of pixels in grayscale.

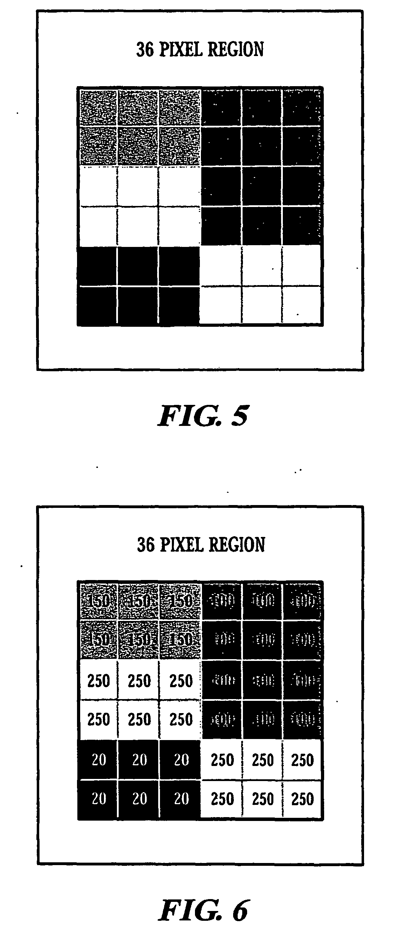

Figure 5 shows a 36-pixel region within the sample MRI image of the human brain.

Figure 6 shows the ASCII value equivalents of the image data values which are originally used for data storage. Each value requires eight bits (1 byte) of data memory. Currently, the 36-pixel region requires about 288 bits or 36 bytes of data memory. That data could be compressed and stored with only 112 bits after repetition coded compression.

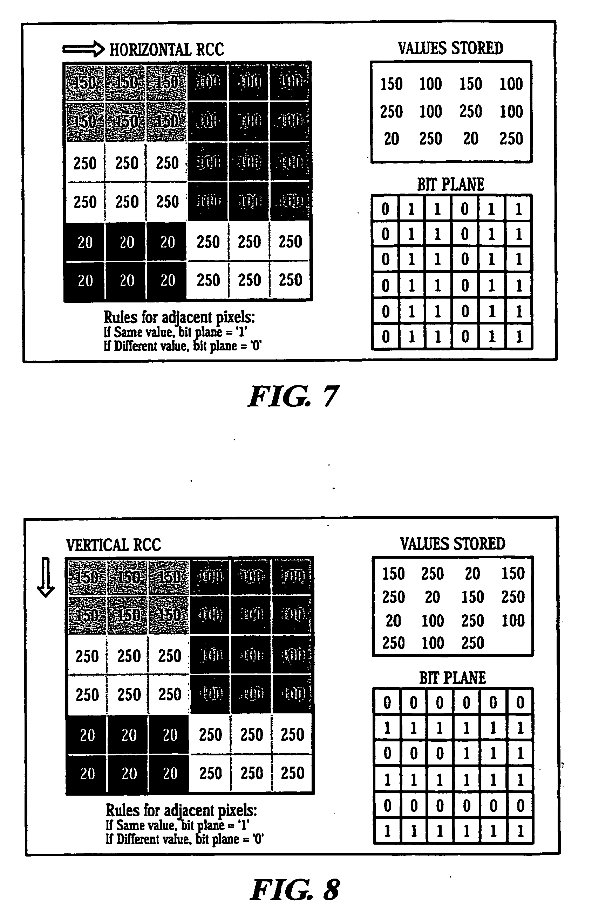

Figure 7 shows the application of repetition coded compression along the horizontal direction in the image matrix. This results in the horizontal bit-plane and also the horizontal values stored.

Figure 8 shows the application of repetition coded compression along the vertical direction in the image matrix. This result in the vertical bit-plane, and also the vertical values stored.

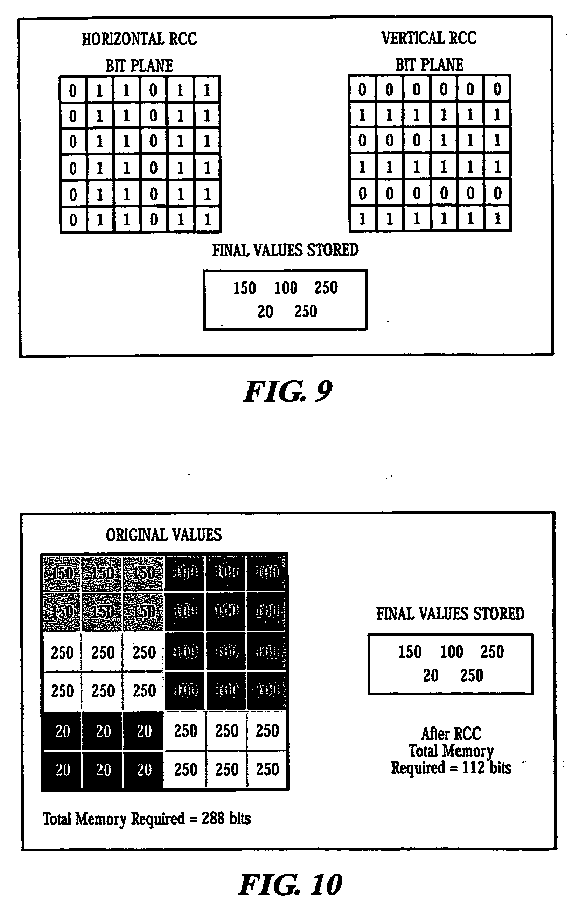

Figure 9 shows the combination of horizontal and vertical bit-planes by a binary addition operation. This results in only five zero values which correspond to the final values stored from the original image matrix.

Figure 10 shows the total memory required for the 36-pixel region before and after applying repetition coded compression. The original memory requirement was 288 bits. After applying repetition coded compression the memory required was 112 bits. This is a great amount of compression.

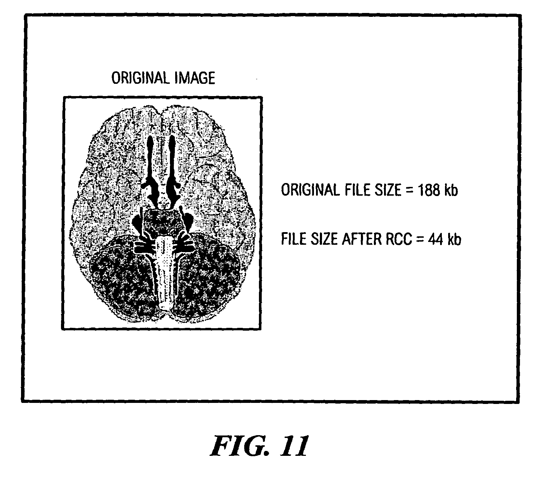

Figure 11 shows the application of repetition coded compression to the entire image. The size is compressed to 44,000 bits from the original 188,000 bits.

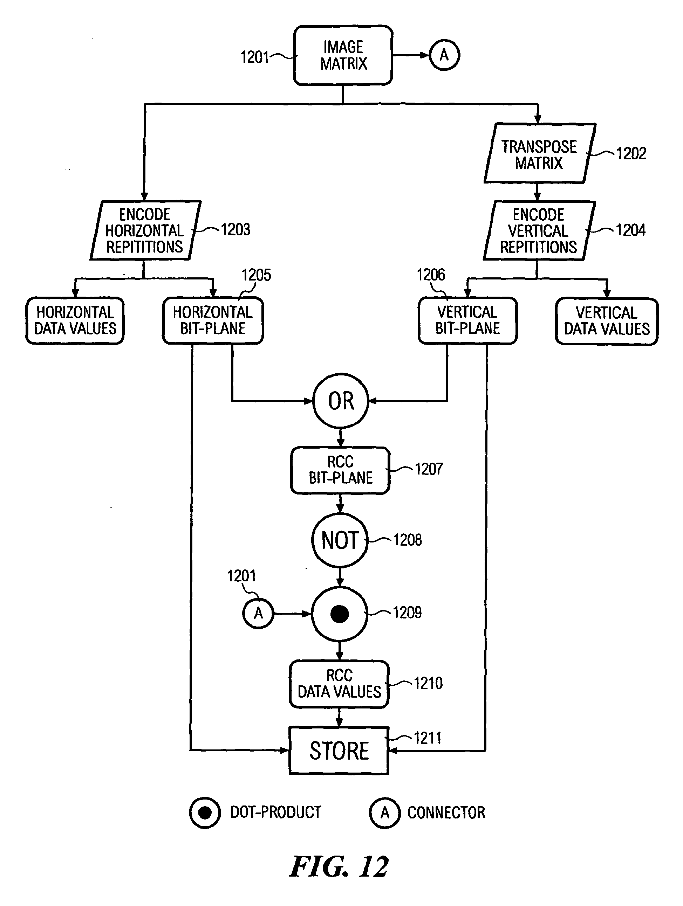

Figure 12 shows an implementation of repetition coded compression. The image matrix 1201 is transposed 1202, encoded along the horizontal 1203 and vertical 1204 directions and the respective bit-planes 1205, 1206 are derived. Further compression is achieved by combining the horizontal and vertical bit-planes 1203, 1204 by a binary addition operation. This results in the repetition coded compression bit-plane 1207, which is logically inverted 1208 and compared 1209 with the original image matrix 1201 to obtain the final repetition coded compression data values 1210. The repetition coded compression data values 1210, together with the horizontal and vertical 1206bit-planes are stored in a data memory 1211 for archival and future retrieval.

The coded data can be further compressed by Huffman coding. This compression of the image data is achieved using the repetition coded compression system. This system is fast as it does not make use of complex transform techniques. The method may be used for any type of image file. In the example given above, the system is applied only for grayscale images. It may be applied to color images.

The system of repetition coded compression of images may be applied to fields such as, for example, medical image archiving and transmission, database systems, information technology, entertainment, communications and wireless applications, satellite imaging, remote sensing, military applications.

The preferred embodiment of the present invention is based on a single mathematical operation and requires no multiplication for its implementation. This results in memory efficiency, power efficiency, and speed, in performing the compression. Because of the single mathematical operation involved, the system is reversible and lossless. This may be important for applications which demand zero loss. The compression ratios may be significantly higher than existing lossless compression schemes.

If the application permits a lossy compression system, a modification is made to the mathematical operation so that a certain amount of loss is observed in the compression, thereby resulting in higher compression ratios. This lossy compression system would find great applications in entertainment and telecommunication systems.

Whilst there has been described in the foregoing description a preferred embodiment of the present invention, it will be understood by those skilled in the technology that many variations or modifications in details of design, constructions or operation may be made without departing from the present invention.

**Claims**

**1.** A method for compressing image data of an image, the method comprising the steps of:

generating a first bit-plane, each bit-plane value of the first bit-plane being associated with a corresponding image data value, by setting a bit-plane value of the first bit-plane to a first predetermined value if the corresponding image data value is equal to an image data value horizontally adjacent to the corresponding image data value within the image, and otherwise setting that bit-plane value to a second predetermined value, wherein the second predetermined value is different from the first predetermined value;

**characterised in that** the image is a greyscale image or a colour image and **in that** the method comprises the steps of:

generating a second bit-plane, each bit-plane value of the second bit-plane being associated with a corresponding image data value, by setting a bit-plane value of the second bit-plane to the first predetermined value if the corresponding image data value is equal to an image data value vertically adjacent to the corresponding image data value within the image, and otherwise setting that bit-plane value to the second predetermined value; selecting the image data values for which the corresponding bit-plane value of the first bit-plane and the corresponding bit-plane value of the second bit-plane are both the second predetermined value; and storing, as compression data values: the first bit-plane; the second bit-plane; and the image data values selected at the step of selecting.

2. A method according to claim 1, wherein each image data value corresponds to a pixel of the image.

3. A method according to any one of the preceding claims, wherein the first predetermined value is 1, and the second predetermined value is 0.

4. A method according to any one of the preceding claims, in which the step of storing comprises:

   combining the first bit-plane and the second bit-plane by binary addition to form a third bit-plane; and
   using the third bit-plane to identify the image data values to store as compression data values.

5. An apparatus for compressing image data of an image, the apparatus being arranged to carry out a method according to any one the preceding claims.

6. A camera comprising an apparatus according to claim 5.

**Patentansprüche**

1. Verfahren zum Komprimieren von Bilddaten eines Bildes, wobei das Verfahren die folgenden Schritte umfasst:

   - Erzeugen einer ersten Bitebene, wobei jeder Bitebenenwert der ersten Bitebene einem entsprechenden Bilddatenwert zugeordnet ist, durch Setzen eines Bitebenenwertes der ersten Bitebene auf einen ersten vorbestimmten Wert, wenn der entsprechende Bilddatenwert gleich einem dem entsprechenden Bilddatenwert innerhalb des Bildes horizontal benachbarten Bilddatenwert ist, und andernfalls Setzen dieses Bitebenenwertes auf einen zweiten vorbestimmten Wert, wobei der zweite vorbestimmten Wert sich von dem ersten vorbestimmten Wert unterscheidet;

   **dadurch gekennzeichnet, dass** das Bild ein Graustufenbild oder ein Farbbild ist, und dass das Verfahren die folgenden Schritte umfasst:

   - Erzeugen einer zweiten Bitebene, wobei jeder Bitebenenwert der zweiten Bitebene einem entsprechenden Bilddatenwert zugeordnet ist, durch Setzen eines Bitebenenwertes der zweiten Bitebene auf den ersten vorbestimmten Wert, wenn der entsprechende Bilddatenwert gleich einem dem entsprechenden Bilddatenwert innerhalb des Bildes vertikal benachbarten Bilddatenwert ist, und andernfalls Setzen dieses Bitebenenwertes auf den zweiten vorbestimmten Wert;
   - Auswählen der Bilddatenwerte, für welche der entsprechende Bitebenenwert der ersten Bitebene und der entsprechende Bitebenenwert der zweiten Bitebene beide der vorbestimmte zweite Wert sind; und
   - Speichern der ersten Bitebene, der zweiten Bitebene und der beim Schritt des Auswählens ausgewählten Bilddatenwerte als Kompressionsdatenwerte.

2. Verfahren nach Anspruch 1, wobei jeder Bilddatenwert einem Pixel des Bildes entspricht.

3. Verfahren nach einem der vorhergehenden Ansprüche, wobei der erste vorbestimmte Wert 1 ist, und der zweite vorbestimmte Wert 0 ist.

4. Verfahren nach einem der vorhergehenden Ansprüche, wobei der Schritt des Speicherns umfasst:

   - Kombinieren der ersten Bitebene und der zweiten Bitebene durch binäre Addition zum Bilden einer dritten Bitebene; und
   - Benutzen der dritten Bitebene zum Identifizieren der als Kompressionsdatenwerte zu speichernden Bilddatenwerte.

**5.** Vorrichtung zum Komprimieren von Bilddaten eines Bildes, wobei die Vorrichtung dazu eingerichtet ist, ein Verfahren nach einem der vorhergehenden Ansprüche durchzuführen.

**6.** Kamera, welche eine Vorrichtung nach Anspruch 5 umfasst.


**Revendications**

**1.** Procédé pour comprimer des données d'image d'une image, le procédé comprenant les étapes consistant à :

générer un premier plan de bits, chaque valeur de plan de bits du premier plan de bits étant associée à une valeur de données d'image correspondante, par l'établissement d'une valeur de plan de bits du premier plan de bits à une première valeur prédéterminée si la valeur de données d'image correspondante est égale à une valeur de données d'image horizontalement adjacente à la valeur de données d'image correspondante à l'intérieur de l'image, et, sinon, l'établissement de cette valeur de plan de bits à une deuxième valeur prédéterminée, la deuxième valeur prédéterminée étant différente de la première valeur prédéterminée ;

**caractérisé en ce que** l'image est une image d'échelle de gris ou une images en couleurs et **en ce que** le procédé comprend les étapes consistant à :

générer un deuxième plan de bits, chaque valeur de plan de bits du deuxième plan de bits étant associée à une valeur de données d'image correspondante, par l'établissement d'une valeur de plan de bits du deuxième plan de bits à la première valeur prédéterminée si la valeur de données d'image correspondante est égale à une valeur de données d'image verticalement adjacente à la valeur de données d'image correspondante à l'intérieur de l'image, et, sinon, l'établissement de cette valeur de plan de bits à la deuxième valeur prédéterminée ;
sélectionner les valeurs de données d'image pour lesquelles la valeur de plan de bits correspondante du premier plan de bits et la valeur de plan de bits correspondante du deuxième plan de bits sont toutes deux la deuxième valeur prédéterminée ; et
mémoriser, sous la forme de valeurs de données de compression : le premier plan de bits ; le deuxième plan de bits ; et les valeurs de données d'image sélectionnées dans l'étape de sélection.

**2.** Procédé selon la revendication 1, dans lequel chaque valeur de données d'image correspond à un pixel de l'image.

**3.** Procédé selon l'une quelconque des revendications précédentes dans lequel la première valeur prédéterminée est 1, et la deuxième valeur prédéterminée est 0.

**4.** Procédé selon l'une quelconque des revendications précédentes, dans lequel l'étape de mémorisation comprend:

la combinaison du premier plan de bits et du deuxième plan de bits par addition binaire de façon à former un troisième plan de bits ; et
l'utilisation du troisième plan de bits pour identifier les valeurs de données d'image à mémoriser sous la forme de valeurs de données de compression.

**5.** Dispositif pour comprimer des données d'image d'une image, le dispositif étant configuré de façon à mettre en oeuvre un procédé selon l'une quelconque des revendications précédentes.

**6.** Caméra ou appareil photographique comprenant un dispositif selon la revendication 5.

## RCC SYSTEM FOR HARDWARE IMPLEMENTATION

IMAGE SIGNAL 12 → ANALOG TO DIGITAL CONVERTER 14 → DIGITAL IMAGE DATA 16 → RESHAPING BLOCK 18

10

RCC ALGORITHM IMPLEMENTED ON A CHIP 20

COMPRESSED DATA 22

BIT-PLANES OF DATA 24

STORAGE MEDIUM 26

*FIG. 1*

SAMPLE MRI OF HUMAN BRAIN

*FIG. 2*

**FIG. 3**

**FIG. 4**

**36 PIXEL REGION**

## FIG. 5

**36 PIXEL REGION**

| 150 | 150 | 150 | 100 | 100 | 100 |
|-----|-----|-----|-----|-----|-----|
| 150 | 150 | 150 | 100 | 100 | 100 |
| 250 | 250 | 250 | 100 | 100 | 100 |
| 250 | 250 | 250 | 100 | 100 | 100 |
| 20  | 20  | 20  | 250 | 250 | 250 |
| 20  | 20  | 20  | 250 | 250 | 250 |

## FIG. 6

⟹ HORIZONTAL RCC

**VALUES STORED**

| 150 | 100 | 150 | 100 |
|-----|-----|-----|-----|
| 250 | 100 | 250 | 100 |
| 20  | 250 | 20  | 250 |

**BIT PLANE**

| 0 | 1 | 1 | 0 | 1 | 1 |
|---|---|---|---|---|---|
| 0 | 1 | 1 | 0 | 1 | 1 |
| 0 | 1 | 1 | 0 | 1 | 1 |
| 0 | 1 | 1 | 0 | 1 | 1 |
| 0 | 1 | 1 | 0 | 1 | 1 |
| 0 | 1 | 1 | 0 | 1 | 1 |

Rules for adjacent pixels:
If Same value, bit plane = '1'
If Different value, bit plane = '0'

**FIG. 7**

VERTICAL RCC

**VALUES STORED**

| 150 | 250 | 20  | 150 |
|-----|-----|-----|-----|
| 250 | 20  | 150 | 250 |
| 20  | 100 | 250 | 100 |
| 250 | 100 | 250 |     |

**BIT PLANE**

| 0 | 0 | 0 | 0 | 0 | 0 |
|---|---|---|---|---|---|
| 1 | 1 | 1 | 1 | 1 | 1 |
| 0 | 0 | 0 | 1 | 1 | 1 |
| 1 | 1 | 1 | 1 | 1 | 1 |
| 0 | 0 | 0 | 0 | 0 | 0 |
| 1 | 1 | 1 | 1 | 1 | 1 |

Rules for adjacent pixels:
If Same value, bit plane = '1'
If Different value, bit plane = '0'

**FIG. 8**

## HORIZONTAL RCC
### BIT PLANE

| 0 | 1 | 1 | 0 | 1 | 1 |
|---|---|---|---|---|---|
| 0 | 1 | 1 | 0 | 1 | 1 |
| 0 | 1 | 1 | 0 | 1 | 1 |
| 0 | 1 | 1 | 0 | 1 | 1 |
| 0 | 1 | 1 | 0 | 1 | 1 |
| 0 | 1 | 1 | 0 | 1 | 1 |

## VERTICAL RCC
### BIT PLANE

| 0 | 0 | 0 | 0 | 0 | 0 |
|---|---|---|---|---|---|
| 1 | 1 | 1 | 1 | 1 | 1 |
| 0 | 0 | 0 | 1 | 1 | 1 |
| 1 | 1 | 1 | 1 | 1 | 1 |
| 0 | 0 | 0 | 0 | 0 | 0 |
| 1 | 1 | 1 | 1 | 1 | 1 |

### FINAL VALUES STORED

150  100  250
20   250

## FIG. 9

### ORIGINAL VALUES

| 150 | 150 | 150 | 100 | 100 | 100 |
|-----|-----|-----|-----|-----|-----|
| 150 | 150 | 150 | 100 | 100 | 100 |
| 250 | 250 | 250 | 100 | 100 | 100 |
| 250 | 250 | 250 | 100 | 100 | 100 |
| 20  | 20  | 20  | 250 | 250 | 250 |
| 20  | 20  | 20  | 250 | 250 | 250 |

Total Memory Required = 288 bits

### FINAL VALUES STORED

150  100  250
20   250

After RCC
Total Memory
Required = 112 bits

## FIG. 10

ORIGINAL IMAGE

ORIGINAL FILE SIZE = 188 kb

FILE SIZE AFTER RCC = 44 kb

*FIG. 11*

*FIG. 12*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Bit-Plane Encoding : A Technique for Source Encoding. **SCHWARTZ JW ; BARKER RC.** IEEE Transactions on Aerospace and Electronic Systems. IEEE Service Center, July 1966

- **ROBINSON et al.** Differential Block Coding of Bilevel Images. *IEEE Trans. on Image Proc.,* September 1996, vol. 5 (9